# FASCICULE DE BREVET EUROPEEN

(11) **EP 3 016 559 B1**
(45) Date de publication et mention de la délivrance du brevet: **08.08.2018**
(21) Numéro de dépôt: 14735548.1
(22) Date de dépôt: 30.06.2014
(51) Int. Cl.: A47J 42/40, A47J 31/40, A47J 31/44

(54) **MACHINE DE PRÉPARATION DE BOISSONS AVEC DISPOSITIF DE PORTE-FILTRE AMOVIBLE ET ÉLÉMENT DE SÉLECTION D'UN MODE DE FONCTIONNEMENT DE LA MACHINE**
MASCHINE ZUM ZUBEREITEN VON GETRÄNKEN MIT EINER ENTFERNBAREN FILTERHALTEVORRICHTUNG UND ELEMENT ZUR AUSWAHL EINES BETRIEBSMODUS DER MASCHINE
MACHINE FOR PREPARING BEVERAGES WITH REMOVABLE FILTER HOLDER DEVICE AND ELEMENT FOR SELECTING AN OPERATION MODE OF THE MACHINE

(30) Priorité: 05.07.2013 FR 1356605
(43) Date de publication de la demande: 11.05.2016
(73) Titulaire: Levi, Jean-Pierre, 06200 Nice (FR); Levi, Mario, 06200 Nice (FR)
(72) Inventeur: Levi, Jean-Pierre, 06200 Nice (FR); Levi, Mario, 06200 Nice (FR)
(74) Mandataire: Decobert, Jean-Pascal
(86) Numéro de dépôt international: PCT/EP2014/063826
(87) Numéro de publication internationale: WO 2015/000834

(56) Documents cités:
- EP-A1- 0 280 594
- FR-A- 1 069 975
- FR-A- 1 156 557

## Description

La présente invention porte sur une machine utilisable lors de la préparation de boissons pour la préparation de boissons à base de mouture d'un produit à infuser, ce système étant avantageusement constitué par un moulin de préparation de la mouture et par une machine de préparation de boissons du produit à infuser, le produit étant avantageusement mais pas seulement du café. Le terme infusion est à prendre dans son sens large, l'infusion pouvant être réalisée, par exemple, en faisant passer de l'eau chaude dans un filtre rempli de produit moulu et étant alors appelée lixiviation ou lixiviation forcée.

Dans ce domaine, et particulièrement pour la préparation de cafés dit espressos, on utilise communément un ensemble de support d'une dose de mouture de café, constituant un dispositif de porte-filtre. Le dispositif de porte-filtre comporte une partie de préhension pour la main d'un utilisateur sous forme d'un manche et une partie de réception avec un filtre à mouture de café au sein d'une coupe porte-filtre.

En partie inférieure du dispositif, en aval du fond filtrant de la coupe, une sortie comportant une ou plusieurs voies est constituée pour l'évacuation de la boisson réalisée. Ce type de dispositif de porte-filtre coopère soit avec l'interface de réception d'un moulin à café pour le chargement en mouture de café du dispositif, soit avec l'interface d'une machine de préparation de boissons pour l'injection d'eau chaude au travers de la mouture et la réalisation de la boisson. La coupe du porte-filtre est configurée pour recevoir une quantité prédéterminée de mouture de café.

Généralement, on peut fabriquer simultanément une, deux ou plus de boissons au café. L'utilisateur, notamment un cafetier, choisit le dispositif de porte-filtre comportant la coupe adaptée au nombre de boissons qu'il souhaite réaliser.

Selon l'état de la technique illustré par la publication EP-A1-280 594, il est prévu un système de détection de doses pour dispositif de porte-filtre comportant une coupe. La technique mise en oeuvre suivant cette antériorité consiste à utiliser des capteurs magnétiques à effet hall permettant, suivant un codage prédéterminé et suivant un mouvement de placement en rotation du dispositif de porte-filtre, d'identifier quelques types différents de dispositifs de porte-filtre.

Bien que donnant globalement satisfaction, le dispositif en question présente certaines limitations. En premier lieu, le nombre de types de dispositifs de porte-filtre détectables est limité par la construction même du capteur. Ce dispositif ne peut donc pas être étendu à des détections en plus grand nombre notamment liées outre au volume de la mouture de café ou à des paramètres de préparation de boisson qui peuvent varier suivant la qualité de type de café.

D'autre part, si la caractéristique relative au nombre de boissons réalisées en correspondance à un porte-filtre donné et donc par exemple pour une quantité spécifique de mouture à produire par le moulin pour le porte-filtre donné est la plus fréquente, cette caractéristique peut être combinée avec ou être remplacée par une ou des autres caractéristiques, cette ou ces autres caractéristiques pouvant par exemple concerner la finesse de la mouture et/ou un ou des paramètres de température et de pression de la machine de préparation de boissons.

Dans un tel cas, il y devrait y avoir autant de dispositifs de porte-filtre de configuration différente que de possibilités de combinaison des différentes caractéristiques relatives à la boisson ou à la préparation de boisson. Ceci exigerait donc un certain nombre de dispositifs de porte-filtre différents et rendrait une telle détection de telles caractéristiques difficile voire impossible à mettre en oeuvre et surtout économiquement non viable.

De plus, avec cette détection selon l'état de la technique, l'utilisateur n'a aucun moyen d'interférer dans la sélection car celle-ci s'effectue entièrement automatiquement donc sans nécessiter son concours.

Le document FR-A-1.156.557 prévoit, dans une machine de fabrication de boissons de type cafés, un dispositif d'actionnement de la mise en route de la fabrication de boisson qui est commandé par la mise en place de la coupelle porte-infusion. Le système agit comme un interrupteur entre deux positions et ne résout donc pas le problème de la technique rencontrée précédemment.

Un problème à la base de la présente invention est d'obtenir lors de la mise en place d'un dispositif de porte-filtre sur une machine de préparation de boissons à base d'un produit à infuser une sélection d'une des caractéristiques du produit à infuser ou de son procédé de préparation sans que cela nécessite un porte-filtre différent pour chacune des caractéristiques possibles, ces caractéristiques étant plurielles.

A cet effet, on prévoit selon l'invention une interface de réception pour machine de préparation de boissons par infusion à partir d'une mouture de produit à infuser, l'interface recevant de manière amovible par action manuelle d'un utilisateur un dispositif de porte-filtre destiné à contenir la mouture du produit, caractérisée en ce qu'elle comporte un élément de sélection mobile à partir d'une position de repos et configuré pour atteindre afin qu'il atteigne l'une parmi plusieurs positions de travail correspondant chacune à un mode respectif de fonctionnement de la machine, l'élément de sélection étant déplaçable vers l'une ou l'autre des positions de travail par le dispositif de porte-filtre quand reçu dans l'interface de réception.

L'effet technique est la sélection d'un mode de fonctionnement de la machine combinée avec l'action de l'utilisateur plaçant manuellement le dispositif de porte-filtre. Ainsi, il est évité l'emploi d'un dispositif de porte-filtre spécifique à un mode de fonctionnement respectif. Cela permet de simplifier la gestion des dispositifs de porte-filtre ainsi que de réaliser une économie sur la fabrication de ces divers dispositifs. Le geste à faire par l'utilisateur est simple, l'élément de sélection disposé sur l'interface de réception étant aisément accessible au dispositif de porte-filtre guidé par la main de l'utilisateur se dirigeant vers cette interface pour son positionnement sur l'interface.

Il faut noter que l'invention a l'avantage de permettre à l'utilisateur, de manière aisée, une sélection parmi plusieurs positions de l'élément de sélection ce qui signifie qu'au moins trois positions peuvent être atteintes (une position de repos, et au moins deux positions de travail chacune correspondant à un mode de fonctionnement de la machine).

Par ailleurs, la machine peut comporter un bouton ou autre moyen de déclenchement pour lancer la fabrication de boisson après mise en place du dispositif porte-filtre sélectionnant une position de travail. Dans un autre cas, la mise en route est automatiquement lancée une fois la sélection de position de travail opérée.

De manière facultative, l'invention comprend en outre au moins l'une quelconque des caractéristiques suivantes :
- le déplacement de l'élément de sélection est un pivotement de l'élément par rapport à l'une de ses extrémités ;
- l'élément de sélection est sous la forme d'un levier dont la tête est montée pivotante autour d'un pivot solidarisé à l'interface ;
- lesdites au moins deux positions de travail sont obtenues par pivotement dans des sens contraires de l'élément de sélection autour de la position de repos ;
- l'élément de sélection comprend un moyen de rappel mécanique en position de repos ;
- le moyen de rappel comprend un ressort ;
- le moyen de rappel comprend une boucle déformable élastiquement, la boucle passant par un point d'ancrage sur l'interface de réception et au moins un point d'ancrage sur l'élément de sélection, le déplacement de l'élément de sélection étirant ladite boucle élastiquement déformable qui reprend sa forme non étirée quand aucune sollicitation n'est appliquée sur elle ;
- le moyen de rappel comprend un organe magnétique ;
- l'invention comprend pour chaque position de travail au moins un moyen de détection du passage de l'élément de sélection dans la position de travail ;
- le moyen de détection est un microcontact ;
- le moyen de détection est un capteur électronique notamment, du type à effet Hall, inductif, capacitif, RFID ou radio-identification, reed autrement appelé à lames souples, photoélectrique, le capteur étant porté par l'un parmi l'élément de sélection ou l'interface de réception, un élément complémentaire au capteur étant porté par l'autre parmi l'interface ou l'élément.

Selon un autre objet de l'invention, on prévoit une machine de préparation de boissons par infusion, caractérisée en ce qu'elle comprend une telle interface de réception, l'interface étant amovible ou non du reste de la machine.

Avantageusement, quand au moins un moyen de détection est prévu pour chaque position de travail, ledit au moins un moyen de détection étant relié à une unité centrale de la machine, l'unité centrale activant le mode de fonctionnement correspondant à la position de travail atteinte par l'élément de sélection.

La machine au niveau du corps de base, peut comprendre un système de positionnement d'un dispositif de porte-filtre.

Avantageusement, il est prévu des moyens d'affichage d'un signal visuel indiquant quel mode de fonctionnement a été sélectionné.

Dans un mode de réalisation de l'invention, la machine est un moulin à café comportant une trémie supportée par un corps de base, l'interface de réception étant disposée sur le corps de base.

Avantageusement, l'interface de réception et l'élément de sélection en position de repos s'étendent verticalement sur ladite machine ou avec une inclinaison vers le bas de la machine dans le plan médian longitudinal de la machine en formant un angle aigu par rapport à la verticale.

Dans le cadre de l'invention, on prévoit un procédé de fonctionnement d'une telle machine de préparation de boissons par infusion, le procédé comprenant les étapes suivantes :
- sélection d'un mode de fonctionnement de la machine par action du dispositif de porte-filtre sur l'élément de sélection et déplacement de celui-ci dans une des positions de travail correspondant audit mode de fonctionnement,
- mise en fonctionnement de la machine automatiquement avec le mode de fonctionnement choisi.

Avantageusement, les modes de fonctionnement concernent la quantité de mouture à placer dans le dispositif de porte-filtre, la finesse ou la qualité de la mouture ou un ou des paramètres de fonctionnement de la machine tels que la température et/ou la pression de l'eau servant à l'infusion.

Avantageusement, le mode de fonctionnement sélectionné est opérant seulement après détection de la réception du dispositif de porte-filtre dans l'interface de réception.

Avantageusement, une temporisation de sécurité est mise en place entre la sélection par l'élément de sélection d'un mode de fonctionnement et la mise en fonctionnement de la machine avec le mode de fonctionnement choisi. L'invention concerne aussi un système pourvu d'un dispositif porte-filtre et de l'interface ou la machine.

D'autres caractéristiques, buts et avantages de la présente invention apparaîtront à la lecture de la description détaillée qui va suivre et au regard des dessins annexés donnés à titre d'exemples non limitatifs et sur lesquels :

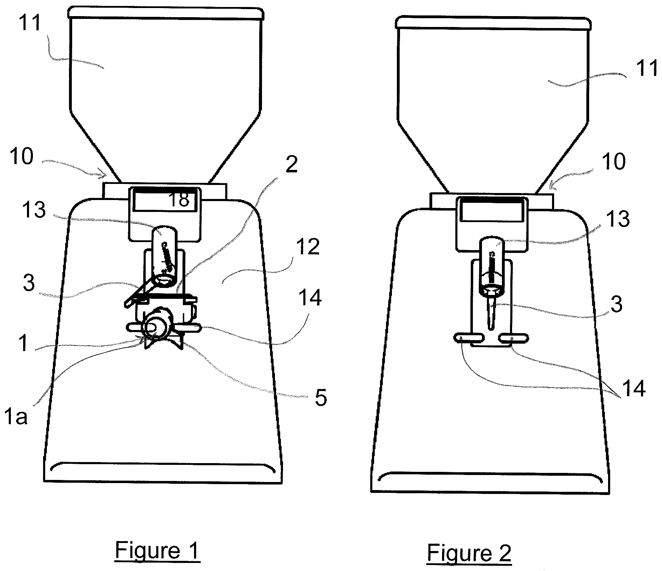

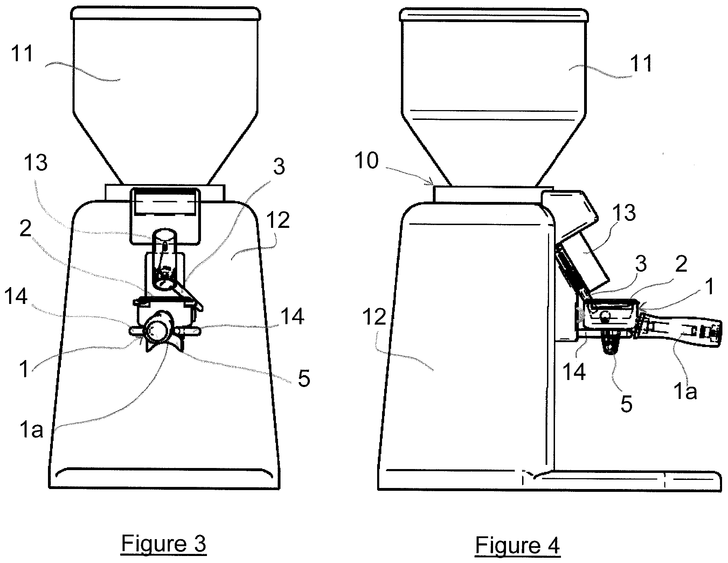

- les figures 1 à 3 sont des représentations schématiques. d'une vue de face d'une machine de préparation de boissons selon la présente invention équipée d'un dispositif de porte-filtre pour les figures 1 et 3 et sans porte-filtre pour la figure 2, la machine comprenant un élément de sélection mobile étant respectivement dans une première position de travail, une position de repos et une deuxième position de travail à ces figures,
- la figure 4 est une représentation schématique d'une vue de côté de la machine montrée à la figure 3,

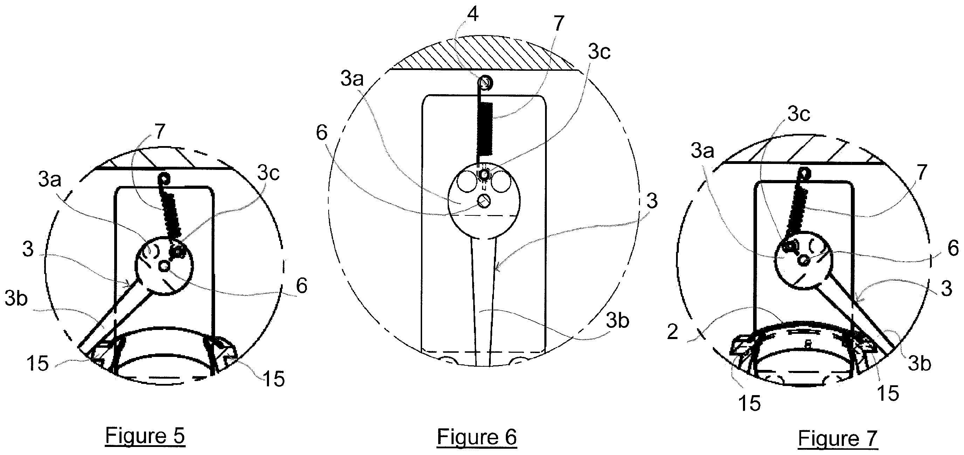

- les figures 5 à 7 sont des représentations schématiques d'une vue agrandie de l'élément de sélection mobile dans la position de l'élément montrée respectivement aux figures 1 à 3, la figure 6 étant en outre agrandie par rapport aux figures 5 et 7, ces figures montrant un moyen de rappel en position de repos de l'élément de sélection,

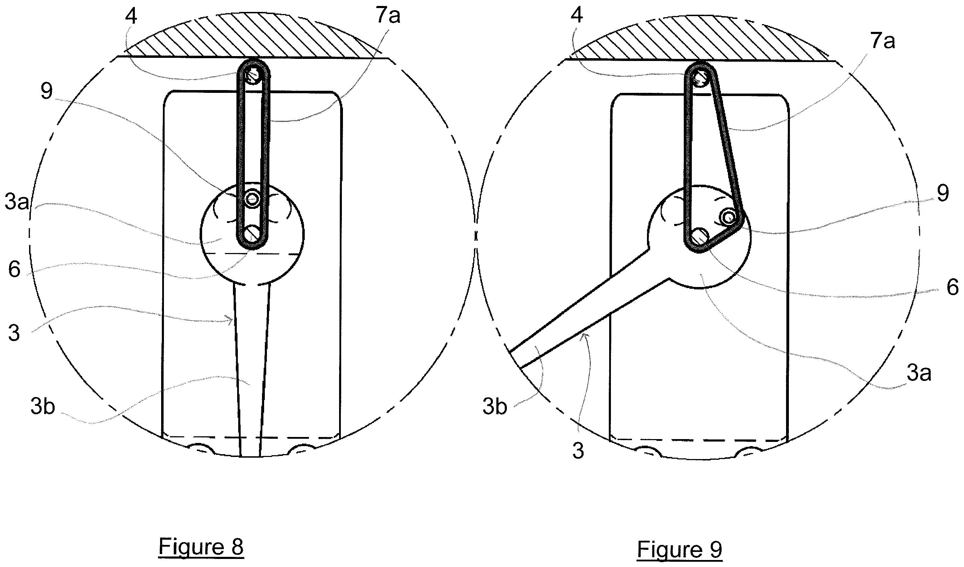

- les figures 8, 9 sont des représentations schématiques d'une vue agrandie de l'élément de sélection mobile selon la présente invention dans une autre forme de réalisation de son moyen de rappel que celle montrée aux figures 5 à 7,

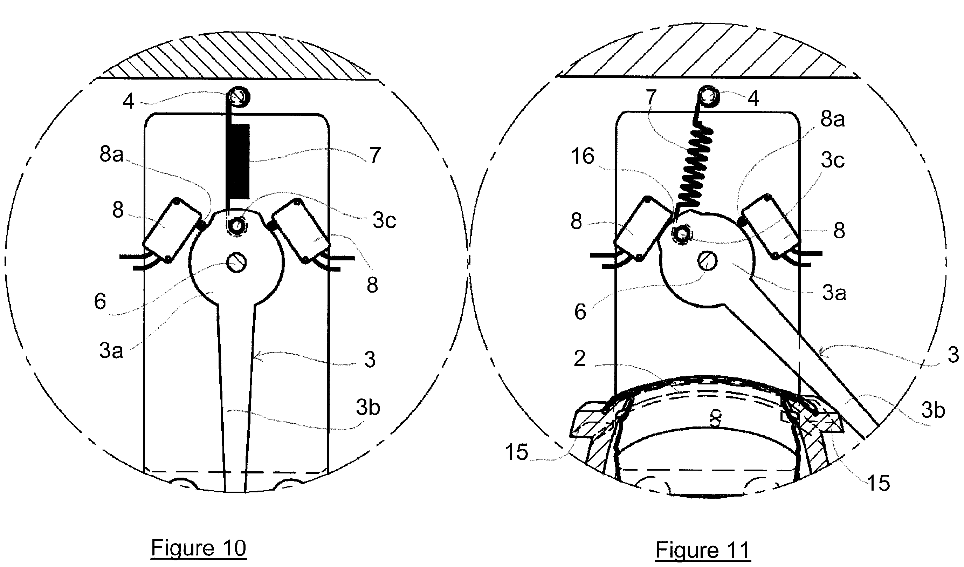

- les figures 10 à 11 sont des représentations schématiques d'une vue agrandie de l'élément de sélection mobile selon la présente invention dans une forme de réalisation comprenant des microcontacts comme détecteurs de la position de l'élément de sélection, la figure 10 illustrant la position de repos de l'élément de sélection tandis que la figure 11 illustre une des deux positions de travail,

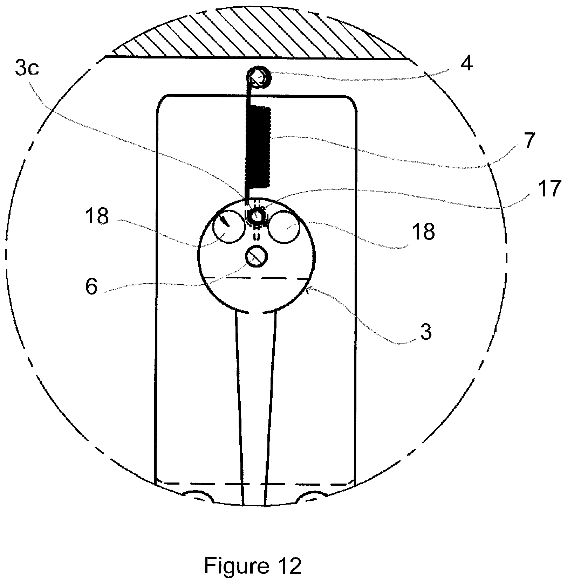

- la figure 12 est une représentation schématique d'une vue agrandie de l'élément de sélection mobile selon la présente invention dans une forme de réalisation comprenant des capteurs à effet Hall comme détecteurs de la position de l'élément de sélection, l'élément de sélection étant dans sa position de repos à cette figure.

En référence aux figures 1 à 4, il est décrit une machine de préparation de boissons illustrée de manière non limitative par un moulin 10, pour moudre un produit à infuser, avantageusement sous forme de café en grains. Le moulin 10 comporte de façon classique un corps de base 12 et une trémie 11 de réception et de stockage de café en grains.

Ce moulin 10 permet de produire une mouture de café délivrée au niveau d'une embouchure formant une interface de réception 13 pour la coupe 2 d'un dispositif de porte-filtre 1 positionné à cet endroit, cette interface de réception 13 étant montrée inclinée vers le bas à la figure 4, ce qui n'est pas limitatif.

Le dispositif de porte-filtre 1 comporte de façon conventionnelle une poignée 1a ainsi qu'une coupe 2 présentant un fond filtrant et apte à recevoir dans son volume intérieur une dose prédéterminée de mouture de café. En partie inférieure, en sortie de liquide, le dispositif 1 est pourvu d'une sortie de boisson 5 pouvant comporter une ou plusieurs voies. Il peut exister autant de dispositifs de porte-filtre 1 ou en alternative autant de coupes de volumes différents que de quantités de mouture souhaitées.

Pour la réception du dispositif de porte-filtre 1 sur l'interface de réception 13, de préférence à la partie inférieure de cette interface 13, est formé ici un système avec deux moyens (ou organes) de positionnement du dispositif de porte-filtre 1 tels que deux organes de support 14 ici figurés sous forme de deux tiges parallèles faisant saillie vers l'avant du moulin 10 illustrant la machine.

Comme il est visible aux figures 1, 3 et 4, ces deux organes de support 14 s'appliquent sur une portion inférieure du dispositif de porte-filtre 1 pour le supporter.

Avantageusement, en alternative ou en combinaison avec ces deux organes de réception 14, il peut être prévu deux baïonnettes de montage pouvant être disposées à la périphérie du dispositif de porte-filtre 1 à sa partie supérieure. Ces baïonnettes de montage font avantageusement saillie au-delà de la paroi du dispositif de porte-filtre 1 pour construire des éléments de coopération avec l'interface de réception 13 du moulin 10 à café illustrant une machine de préparation de boissons.

Selon la présente invention, la machine de préparation de boissons, aux figures représentée par un moulin à café 10, comporte un élément de sélection 3 mobile. Cet élément de sélection 3 mobile est aussi montré agrandi aux figures 5 à 7.

Comme il est visible notamment aux figures 1 à 3, cet élément de sélection 3 peut être déplacé dans une première et dans une seconde positions de travail montrées respectivement aux figures 1 et 3, ceci à partir d'une position de repos montrée à la figure 2. Par position de travail, il est entendu position de sélection.

Ces positions de travail correspondent respectivement à une caractéristique respective du café moulu, comme la quantité de café moulue ou la finesse de la moulure ou à une caractéristique de fabrication du café comme la température ou la pression de l'eau servant à faire le café. La quantité de café moulue est préférée.

Le déplacement en position de travail de l'élément de sélection 3 est effectué par le mouvement du dispositif de porte-filtre 1 vers l'interface de réception 13 et le moulin 10. C'est l'utilisateur qui déplace le dispositif de porte-filtre 1 de manière que l'élément de sélection 3 soit poussé dans une des deux positions de travail.

Dans d'autres modes de réalisation de l'élément de sélection 3, il peut exister plus de deux positions de travail, ces positions étant atteintes lors d'un déplacement mais pas forcément maintenues. Ainsi cela peut être seulement l'atteinte d'un déplacement spécifique qui signale une position de travail et pas seulement sa conservation.

Comme il peut être vu aux figures 5 à 7, le déplacement en position de travail de l'élément de sélection 3 peut se faire par pivotement. Pour ce faire, avantageusement l'élément de sélection 3 présente une tête 3a et un levier 3b. La tête 3a, avantageusement sensiblement circulaire, est articulée en son centre autour d'un pivot 6.

Aux figures, l'élément de sélection 3, notamment son levier 3b, s'étend de manière inclinée vers le bas. Ceci n'est pas limitatif et l'élément de sélection 3 peut aussi s'étendre verticalement en étant pivotant autour d'un pivot 6 horizontal. Dans cette forme de réalisation l'élément de sélection 3 suit l'inclinaison de l'interface de réception 13 en s'étendant dans le plan médian longitudinal de la machine 10 en position de repos et peut être pivoté dans un plan perpendiculaire à ce plan médian longitudinal dans au moins une position de sélection.

Si de manière préférée, l'interface de réception 13 et l'élément de sélection 3 s'étendent verticalement sur ladite machine 10 ou avec une inclinaison présentant un angle aigu par rapport à la verticale en s'étendant dans le plan médian longitudinal de la machine 10, il est possible que l'élément de sélection 3 s'étende horizontalement en étant pivotant autour d'un pivot vertical.

Un autre mouvement qu'un pivotement pour le passage en une des au moins deux positions est aussi possible, l'essentiel étant que c'est le déplacement manuel du dispositif de porte-filtre 2 vers le moulin 10 sous une action spécifique de l'utilisateur qui place l'élément de sélection 3 dans une des positions de travail.

Avantageusement, toujours comme montré aux figures 5 et 7, l'élément de sélection 3 est maintenu en première ou seconde position de travail par la présence du dispositif de porte-filtre 1 alors solidarisé avec le moulin 10. Le dispositif de porte-filtre 1 peut porter à la partie supérieure de sa périphérie des ergots 15 faisant office d'éléments de butée pour l'élément de sélection 3, chacun des ergots 15 correspondant à une position de travail spécifique.

L'élément de sélection 3 comprend un moyen de rappel dans sa position de repos, moyen qui peut prendre plusieurs configurations. Un premier groupe de moyens de rappel est formé par des moyens de rappel mécaniques tandis qu'un second groupe de moyens de rappel est formé par des moyens magnétiques.

Dans un premier mode de réalisation montré aux figures 5 à 7, ce moyen de rappel est sous la forme d'un ressort de rappel 7, avantageusement hélicoïdal, dont une extrémité est reliée à un point d'ancrage 3c à la tête 3a de l'élément de sélection 3 et l'autre extrémité est fixée sur un point d'ancrage 4 fixe par rapport à l'interface de réception ou au corps de base de la machine.

Le ressort 7 est ainsi soumis à un effort de traction lorsque l'élément de sélection 3 prend une des au moins deux positions de travail et est donc rappelé en position de repos dès que rien ne s'oppose à ce mouvement en retour.

Une autre forme de réalisation d'un moyen de rappel mécanique de l'élément de sélection 3 dans sa position de repos est illustrée aux figures 8 et 9. Dans cette forme de réalisation, le moyen de rappel est sous la forme d'une boucle déformable 7a avec une première portion de la boucle 7a entourant partiellement le point d'ancrage 4 avec l'interface de réception ou le corps de base de la machine. Une deuxième portion de la boucle 7a entoure partiellement le pivot 6 de l'élément de sélection 3, le pivot 6 et le point d'ancrage 4 faisant office de point de renvoi de la boucle 7a.

Dans cette forme de réalisation, la tête 3a de l'élément de sélection 3 porte un téton 9, le téton 9 se trouvant entre le pivot 6 et le point d'ancrage 4 en position de repos de l'élément de sélection 3, comme montré à la figure 8. Lors du mouvement de pivotement de l'élément de sélection 3, montré à la figure 9, le téton 9 n'est plus aligné avec le pivot 6 et le point d'ancrage 4.

Le téton 9 sert alors de troisième point de renvoi de la boucle déformable 7a avec une troisième portion de la boucle 7a entourant partiellement le téton 9 : la boucle 7a est alors étirée et revient naturellement dans sa position non étirée quand rien ne s'oppose à ce retour.

Comme précédemment mentionné d'autres types de moyen de rappel peuvent être utilisés. Le moyen de rappel de l'élément de sélection 3 peut être mécanique, comme ressort de traction, boucle déformable ou ressort du type pince à linge.

Cependant, un moyen de rappel magnétique sans contact est possible également. Enfin, pour un élément de sélection 3 à axe incliné ou horizontal, un retour en position de repos de l'élément de sélection 3 par son propre poids du fait de la gravité peut aussi être envisagé.

Les figures 10 et 11 montrent des microcontacts 8 comme détecteurs de position de l'élément de sélection 3 dans l'une de ses positions de travail. Dans la forme de réalisation montrée à ces figures, il y a deux positions de travail correspondant à un pivotement respectivement dans le sens horaire et antihoraire de l'élément de sélection 3 comprenant un levier 3a et une tête 3c pivotante autour d'un pivot 6. Un microcontact 8 est prévu pour chaque position de travail. Chaque microcontact 8 est disposé sur un côté respectif de la tête 3a de l'élément de sélection 3.

Chaque microcontact 8 présente une pointe 8a rétractable qui provoque la détection de la position de l'élément de sélection 3 quand pressée par celui-ci. Pour cela, la tête 3a de l'élément de sélection 3 présente une portion en saillie 16, avantageusement similaire à un profil de came, cette portion 16 pouvant entrer en contact avec la pointe 8a du microcontact 8 et la presser pour la rétracter et provoquer le signal de détection de la position de travail.

En alternative à la portion en saillie 16, il peut être prévu des parties concaves sur la tête 3a de l'élément de sélection 3 en face des microcontacts 8 quand l'élément de sélection 3 est en position de repos, un microcontact 8 rencontrant une partie non concave sur la tête pour la détection d'une position de travail.

La portion en saillie 16 se trouve en position de repos de l'élément de sélection 3 entre les deux microcontacts 8 afin de pouvoir interagir symétriquement et sélectivement avec les deux microcontacts 8 lors de soit une rotation horaire ou antihoraire de l'élément de sélection 3. A la figure 10, en position de repos de l'élément de sélection 3, la pointe 8a de chaque microcontact 8 n'est pas rétractée.

A la figure 11, l'élément de sélection 3 a pivoté dans le sens antihoraire autour du pivot 6 et la portion en saillie 16 a contacté un des microcontacts 8, celui diamétralement opposé, en prenant comme centre le pivot 6, au levier 3b de l'élément de sélection 3, et a rétracté la pointe 8a de ce microcontact 8 pour la détection de la position de travail.

D'une manière générale, comme il y a au moins deux positions de travail, il est requis l'utilisation d'au moins deux capteurs de détection. Tout type de capteur peut être utilisé donc pas seulement un jeu d'au moins deux microcontacts.

Par exemple, ces capteurs peuvent être électroniques sans contact, par exemple un capteur à effet Hall, un capteur inductif, un capteur capacitif, un capteur RFID ou à radio-identification, un capteur reed ou à lames souples, capteur photo-électrique, etc. Dans ces cas, l'élément de sélection 3 est à pourvoir d'un élément détectable par le capteur électronique, par exemple un aimant pour le capteur à effet Hall.

La figure 12 montre une autre forme de réalisation de la détection de la position de travail de l'élément de sélection 3. Cette détection se fait alors par effet Hall. La tête 3a de l'élément de sélection 3 porte alors un aimant 17. Cet aimant 17 lors du pivotement de l'élément de sélection passe dans le voisinage d'au moins un capteur à effet Hall 18, avantageusement au-dessous ou en dessous du capteur.

Le positionnement du capteur à effet Hall 18 correspond à une position de travail de l'élément de sélection 3 pour permettre la détection de l'élément de sélection dans cette position de travail. Il est prévu respectivement un capteur à effet Hall 18 pour chaque position de travail, le plus fréquemment au nombre de deux mais pouvant être de plus de deux.

Avantageusement, les deux positions de travail de l'élément de sélection 3 sont symétriques et l'aimant 17 se trouve entre les deux positions de travail donc entre les deux capteurs à effet Hall. Avantageusement, cet aimant 17 est confondu avec le point d'ancrage 3c du ressort de rappel 7 présent sur la tête 3a de l'élément de sélection 3 quand celui-ci est présent, ce qui n'est pas toujours le cas, un autre moyen de rappel pouvant aussi être utilisé en association avec un ou des capteurs électroniques.

En se référant à toutes les figures, l'invention concerne aussi un procédé de fonctionnement d'une machine 10 de préparation de boisson par infusion, le procédé comprenant l'étape de sélection d'un mode de fonctionnement de la machine 10 par action du dispositif de porte-filtre 1 sur l'élément de sélection 3 et déplacement de celui-ci dans une des positions de travail correspondant audit mode de fonctionnement et l'étape de mise en fonctionnement de la machine 10 avec le mode de fonctionnement choisi.

Le mode de fonctionnement, par exemple un départ de mouture à partir de la trémie d'un moulin, est avantageusement effectif après réception de deux informations. La première information est donnée par la position de l'élément de sélection qui va activer un des capteurs de dose selon le choix de l'utilisateur. La deuxième information est donnée par le capteur de démarrage de la mouture par actionnement du capteur par le dispositif de porte-filtre 1, par exemple directement actionné par la coupe du dispositif de porte-filtre 1.

De manière générale, le mode de fonctionnement sélectionné est opérant seulement après détection d'une réception adéquate du dispositif de porte-filtre 1 dans l'interface de réception 13.

Avantageusement, une temporisation est mise en place entre la sélection par l'élément de sélection 3 d'un mode de fonctionnement et la mise en fonctionnement de la machine 10 avec le mode de fonctionnement choisi. Cette temporisation permet d'éviter en cas de fausse manoeuvre une mise en marche de la machine 10 avec un mode de fonctionnement choisi par erreur.

Il peut être prévu sur la machine des moyens d'affichage d'un signal visuel indiquant quel mode de fonctionnement de la machine a été sélectionné.

L'invention n'est nullement limitée aux modes de réalisation décrits et illustrés qui n'ont été donnés qu'à titre d'exemples.

### REFERENCES

- 1.: Dispositif de porte-filtre
- 1a.: Poignée
- 2.: Coupe
- 3.: Elément de sélection
- 3a.: Tête
- 3b.: Levier
- 3c.: Point d'ancrage
- 4.: Point d'ancrage
- 5.: Sortie de boisson
- 6.: Pivot
- 7.: Ressort de rappel
- 7a.: Boucle déformable
- 8.: Microcontact
- 8a.: Pointe
- 9.: Téton
- 10.: Moulin
- 11.: Trémie
- 12.: Corps de base
- 13.: Interface de réception
- 14.: Organe de support
- 15.: Ergot
- 16.: Portion en saillie
- 17.: Aimant
- 18.: Capteur effet Hall

## Revendications

1. Interface de réception (13) pour machine (10) de préparation de boisson par infusion à partir d'une mouture de produit à infuser, l'interface (13) recevant de manière amovible par action manuelle d'un utilisateur un dispositif de porte-filtre (1) destiné à contenir la mouture du produit, interface qui comporte un élément de sélection (3) mobile à partir d'une position de repos, **caractérisée** en ce l'élément de sélection (3) est configuré pour atteindre l'une parmi plusieurs positions de travail différant entre elles et différant de la position de repos et correspondant chacune à un mode respectif de fonctionnement de la machine (10), l'élément de sélection (3) étant déplaçable vers l'une ou l'autre des positions de travail par le dispositif de porte-filtre (1) quand reçu dans l'interface de réception (13), en en ce qu'elle comprend pour chaque position de travail au moins un moyen de détection (8, 18) du passage de l'élément de sélection (3) dans ladite position de travail.

2. Interface de réception (13) selon la revendication précédente, dans laquelle le déplacement de l'élément de sélection (3) est un pivotement de l'élément (3) par rapport à l'une de ses extrémités.

3. Interface de réception (13) selon la revendication précédente, dans laquelle lesdites au moins deux positions de travail sont obtenues par pivotement dans des sens contraires de l'élément de sélection (3) autour de la position de repos.

4. Interface de réception (13) selon l'une quelconque des revendications précédentes, dans laquelle l'élément de sélection (3) comprend un moyen de rappel (7, 7a) en position de repos.

5. Interface de réception (13) selon la revendication 4, dans laquelle le moyen de rappel comprend un ressort (7) ou une boucle déformable (7a) élastiquement, la boucle (7a) passant par un point d'ancrage (4) sur l'interface de réception (13) et au moins un point d'ancrage (6) sur l'élément de sélection (3), le déplacement de l'élément de sélection (3) étirant ladite boucle (7a) élastiquement déformable qui reprend sa forme non étirée quand aucune sollicitation n'est appliquée sur elle.

6. Interface de réception (13) selon l'une quelconque des revendications précédentes, dans laquelle le moyen de détection est un microcontact (8) ou un capteur électronique (18) notamment, du type à effet Hall, inductif, capacitif, RFID, reed, photoélectrique, le capteur (18) étant porté par l'un parmi l'élément de sélection (3) ou l'interface de réception (13), un élément complémentaire (17) au capteur (18) étant porté par l'autre parmi l'interface (13) ou l'élément (3).

7. Machine (10) de préparation de boisson par infusion, **caractérisée en ce qu'**elle comprend une interface de réception (13) selon l'une quelconque des revendications précédentes, le au moins un moyen de détection (8, 18) étant relié à une unité centrale de la machine (10), l'unité centrale activant le mode de fonctionnement correspondant à la position de travail atteinte par l'élément de sélection (3).

8. Machine (10) selon la revendication précédente comportant un système de positionnement d'un dispositif de porte-filtre (1).

9. Machine (10) selon l'une quelconque des deux revendications précédentes, laquelle est un moulin à café comportant une trémie (11) supportée par un corps de base (12), l'interface de réception (13) étant disposée sur le corps de base (12).

10. Machine (10) selon l'une quelconque des trois revendications précédentes, dans laquelle l'interface de réception (13) et l'élément de sélection (3) en position de repos s'étendent verticalement sur ladite machine (10) ou avec une inclinaison vers le bas de la machine (10) dans le plan médian longitudinal de la machine (10) en formant un angle aigu par rapport à la verticale.

11. Procédé de fonctionnement d'une machine (10) de préparation de boisson par infusion selon l'une quelconque des revendications 7 à 10, le procédé comprenant les étapes suivantes :
- sélection d'un mode de fonctionnement de la machine (10) par action du dispositif de porte-filtre (1) sur l'élément de sélection (3) et déplacement de celui-ci dans une des positions de travail différant entre elles et différant de la position de repos et correspondant à chacune à un mode respectif de fonctionnement,
- mise en fonctionnement de la machine (10) automatiquement avec le mode de fonctionnement sélectionné.

12. Procédé selon la revendication précédente, dans lequel les modes de fonctionnement concernent la quantité de mouture à placer dans le dispositif de porte-filtre (1), la finesse ou la qualité de la mouture ou un ou des paramètres de fonctionnement de la machine (10) tels que la température ou la pression de l'eau servant à l'infusion.

13. Procédé selon l'une quelconque des deux revendications précédentes, dans lequel le mode de fonctionnement sélectionné est opérant seulement après détection de la réception du dispositif de porte-filtre (1) dans l'interface de réception (13).

14. Procédé selon l'une quelconque des trois revendications précédentes, pour lequel une temporisation de sécurité est mise en place entre la sélection par l'élément de sélection (3) d'un mode de fonctionnement et la mise en fonctionnement de la machine (10) avec le mode de fonctionnement choisi.

## Patentansprüche

1. Aufnahmeschnittstelle (13) für eine Maschine (10) zur Zubereitung eines Getränks durch Aufguss ausgehend von einem Mahlgut eines aufzugießenden Produkts, wobei die Schnittstelle (13) durch manuelle Aktion eines Benutzer eine Filterträgervorrichtung (1) in entfernbarer Weise aufnimmt, die dazu vorgesehen ist, das Mahlgut des Produkts zu enthalten, wobei die Schnittstelle ein Auswahlelement (3) umfasst, welches ausgehend von einer Ruhestellung beweglich ist, **dadurch gekennzeichnet, dass** das Auswahlelement (3) dafür ausgebildet ist, eine aus mehreren Arbeitsstellungen zu erreichen, die sich untereinander unterscheiden und von der Ruhestellung unterscheiden und jede einem jeweiligen Betriebsmodus der Maschine (10) entsprechen, wobei das Auswahlelement (3) von der Filterträgervorrichtung (1) zur einen oder anderen der Arbeitsstellungen verlagert werden kann, wenn diese in der Aufnahmeschnittstelle (13) aufgenommen ist, und dadurch, dass es für jede Arbeitsstellung mindestens ein Erfassungsmittel (8, 18) des Wechsels des Auswahlelements (3) in die Arbeitsstellung umfasst.

2. Aufnahmeschnittstelle (13) nach dem vorstehenden Anspruch, wobei die Verlagerung des Auswahlelements (3) ein Schwenken des Elements (3) in Bezug auf eines seiner Enden ist.

3. Aufnahmeschnittstelle (13) nach dem vorstehenden Anspruch, wobei die mindestens zwei Arbeitsstellungen durch Schwenken des Auswahlelements (3) in entgegengesetzte Richtungen um die Ruhestellung herum erhalten werden.

4. Aufnahmeschnittstelle (13) nach einem der vorstehenden Ansprüche, wobei das Auswahlelement (3) ein mittel zum Rückstellen (7, 7a) in Ruhestellung umfasst.

5. Aufnahmeschnittstelle (13) nach Anspruch 4, wobei das Rückstellmittel eine Feder (7) oder eine elastisch verformbare Schlinge (7a) umfasst, wobei die Schlinge (7a) über einen Verankerungspunkt (4) an der Aufnahmeschnittstelle (13) und mindestens einen Verankerungspunkt (6) am Auswahlelement (3) verläuft, wobei die Verlagerung des Auswahlelements (3) die elastisch verformbare Schlinge (7a) verstreckt, die, wenn keine Belastung an sie angelegt wird, wieder ihre nicht verstreckte Form annimmt.

6. Aufnahmeschnittstelle (13) nach einem der vorstehenden Ansprüche, wobei das Erfassungsmittel ein Mikroschalter (8) oder ein elektronischer Sensor (18), insbesondere vom Halleffekt-, induktiven, kapazitiven, RFID-, Reed-, photoelektrischen Typ ist, wobei der Sensor (18) von einem aus dem Auswahlelement (3) oder der Aufnahmeschnittstelle (13) getragen wird, wobei von dem anderen aus der Schnittstelle (13) oder dem Element (3) ein zum Sensor (18) komplementäres Element (17) getragen wird.

7. Maschine (10) zur Zubereitung eines Getränks durch Aufguss, **dadurch gekennzeichnet, dass** sie eine Aufnahmeschnittstelle (13) nach einem der vorstehenden Ansprüche umfasst, wobei das mindestens eine Erfassungsmittel (8, 18) mit einer zentralen Einheit der Maschine (10) verbunden ist, wobei die zentrale Einheit den Betriebsmodus aktiviert, der der vom Auswahlelement (3) erreichten Arbeitsstellung entspricht.

8. Maschine (10) nach dem vorstehenden Anspruch, die ein System zum Positionieren einer Filterträgervorrichtung (1) umfasst.

9. Maschine (10) nach einem der zwei vorstehenden Ansprüche, die eine Kaffeemühle ist, welche einen Trichter (11) umfasst, der von einem Grundkörper (12) gestützt wird, wobei die Aufnahmeschnittstelle (13) am Grundkörper (12) angeordnet ist.

10. Maschine (10) nach einem der drei vorstehenden Ansprüche, wobei sich die Aufnahmeschnittstelle (13) und das Auswahlelement (3) in Ruhestellung vertikal an der Maschine (10) oder mit einer Neigung zur Unterseite der Maschine (10) hin in der Längsmittelebene der Maschine (10) unter Bildung eines spitzen Winkels in Bezug auf die Vertikale erstrecken.

11. Verfahren zum Betrieb einer Maschine (10) zum Zubereiten eines Getränks durch Aufguss nach einem der Ansprüche 7 bis 10, wobei das Verfahren die folgenden Schritte umfasst:
- Auswählen eines Betriebsmodus der Maschine (10) durch Aktion der Filterträgervorrichtung (1) auf das Auswahlelement (3) und Verlagern desselben in eine der Arbeitsstellungen, die sich untereinander unterscheiden und von der Ruhestellung unterscheiden und jede einem jeweiligen Betriebsmodus entsprechen,
- automatisches Inbetriebsetzen der Maschine (10) mit dem ausgewählten Betriebsmodus.

12. Verfahren nach dem vorstehenden Anspruch, wobei die Betriebsmodi die Menge an Mahlgut, die in die Filterträgervorrichtung (1) gegeben werden soll, die Feinheit oder die Qualität des Mahlguts, oder einen oder mehrere Betriebsparameter der Maschine (10), wie etwa die Temperatur oder den Druck des zum Aufguss dienenden Wassers betreffen.

13. Verfahren nach einem der zwei vorstehenden Ansprüche, wobei der ausgewählte Betriebsmodus erst nach Erfassen der Aufnahme der Filterträgervorrichtung (1) in der Aufnahmeschnittstelle (13) betriebsbereit ist.

14. Verfahren nach einem der drei vorstehenden Ansprüche, bei dem eine Sicherheitsverzögerung zwischen der Auswahl eines Betriebsmodus durch das Auswahlelement (3) und dem Inbetriebsetzen der Maschine (10) mit dem ausgewählten Betriebsmodus umgesetzt wird.

## Claims

1. Reception interface (13) for a machine (10) for preparing beverages by infusion from a ground product to be infused, with the interface (13) removably receiving by manual action of a user a filter-holder device (1) intended to contain the ground product, said interface comprises a selection element (3) that is movable from a rest position, **characterised in that** the selection element (3) is configured to reach one among several work positions that differ between them and that differ from the rest position and each corresponding to a respective operation mode of the machine (10), the selection element (3) able to be moved to one or the other of the work positions by the filter-holder device (1) when received in the reception interface (13), and **in that** it comprises for each work position at least one detection means (8, 18) of the passage of the selection element (3) into said work position.

2. Reception interface (13) according to the preceding claim, wherein the displacement of the selection element (3) is a pivoting of the element (3) with respect to one of its ends.

3. Reception interface (13) according to the preceding claim, wherein said at least two work positions are obtained by pivoting in opposite direction of the selection element (3) around the rest position.

4. Reception interface (13) according to any preceding claim, wherein the selection element (3) comprises a means of return (7, 7a) to the rest position.

5. Reception interface (13) according to claim 4, wherein the means of return comprises a spring (7) or an elastically deformable loop (7a), with the loop (7a) passing through an anchoring point (4) on the reception interface (13) and at least one anchoring point (6) on the selection element (3), with the displacement of the selection element (3) stretching said elastically deformable loop (7a) which returns to its non-stretched shape when no stress is applied thereon.

6. Reception interface (13) according to any preceding claim, wherein the detection means is a microswitch (8) or an electronic sensor (18) in particular, of the Hall effect, inductive, capacitive, RFID, reed, photoelectric type, with the sensor (18) being carried by one among the selection element (3) or the reception interface (13), an element (17) complementary to the sensor (18) being carried by the other among the interface (13) or the element (3).

7. Machine (10) for preparing beverages by infusion, **characterised in that** it comprises a reception interface (13) according to any preceding claim, with the at least one detection means (8, 18) being connected to a central unit of the machine (10), with the central unit activating the operation mode that corresponds to the work position reached by the selection element (3).

8. Machine (10) according to the preceding claim comprising a system for positioning a filter-holder device (1).

9. Machine (10) according to any of the two preceding claims, which is a coffee grinder comprising a hopper (11) supported by a core body (12), with the reception interface (13) being arranged on the core body (12).

10. Machine (10) according to any of the three preceding claims, wherein the reception interface (13) and the selection element (3) in rest position extend vertically over said machine (10) or with an inclination towards the bottom of the machine (10) in the longitudinal median plane of the machine (10) by forming an acute angle with respect to the vertical.

11. Method for operating a machine (10) for preparing beverages by infusion according to any of claims 7 to 10, with the method comprising the following steps:
- selecting of an operation mode of the machine (10) by action of the filter-holder device (1) on the selection element (3) and displacement of the latter in one of the work positions that differ between them and that differ from the rest position and with each corresponding to a respective operation mode,
- turning on of the machine (10) automatically with the selected operation mode.

12. Method according to the preceding claim, wherein the operation modes concern the quantity of ground product to be placed in the filter-holder device (1), the finesse or the quality of the ground product or one of the operating parameters of the machine (10) such as the temperature or the pressure of the water used for the infusion.

13. Method according to any of the two preceding claims, wherein the selected operation mode is operational only after detection of the reception of the filter-holder device (1) in the reception interface (13).

14. Method according to any of the three preceding claims, wherein a safety timer is set up between the selecting by the selection element (3) of an operation mode and the turning on of the machine (10) with the operation mode selected.
